# EUROPEAN PATENT SPECIFICATION

(11) **EP 3 366 559 B1**
(45) Date of publication and mention of the grant of the patent: **20.11.2019**
(21) Application number: 18155910.5
(22) Date of filing: 09.02.2018
(51) Int. Cl.: B62K 11/04, B62K 25/28, B62K 19/02, B62K 19/30, B62K 19/04, B62K 19/16

(54) **VEHICLE BODY FRAME STRUCTURE FOR SADDLE RIDING VEHICLE**
FAHRZEUGKAROSSERIERAHMENSTRUKTUR FÜR SATTELFAHRZEUG
STRUCTURE DE CHÂSSIS DE CARROSSERIE DE VÉHICULE ET VÉHICULE DE TYPE À ENFOURCHER

(30) Priority: 28.02.2017 JP 2017036313
(43) Date of publication of application: 29.08.2018
(73) Proprietor: Honda Motor Co., Ltd., Minato-ku Tokyo 107-8556 (JP)
(72) Inventor: Iwakami, Hiroshi, Saitama, 351-0193 (JP)
(74) Representative: Beder, Jens

(56) References cited:
- EP-A1- 3 002 204
- EP-A1- 3 009 337
- JP-A- 2011 073 590

## Description

### BACKGROUND

### Field of the Invention

The present invention relates to a vehicle body frame structure for a saddle riding vehicle.

### Description of Related Art

There is known a vehicle body frame structure for a saddle riding vehicle such as a motorcycle or the like including a head section configured to rotatably support a steering shaft, and a pair of left and right main frames extending from the head section to a rear side of the vehicle body, wherein hanger sections, which are configured to support a power unit, extend from front edge portions of the left and right main frames (for example, see Japanese Unexamined Patent Application, First Publication No. 2011-73590).

In the vehicle body frame structure disclosed in Japanese Unexamined Patent Application, First Publication No. 2011-73590, the head section and the left and right main frames are formed of a metal material, and the left and right hanger sections are connected by a cross member formed of a metal. In the vehicle body frame structure, since bending rigidity of the left and right main frames in a leftward/rightward direction is increased by the cross member, and moreover, the cross member is disposed below main sections of the left and right main frames, a member such as an air cleaner or the like can be disposed above the cross member without interference with the cross member.

### SUMMARY

Incidentally, in the saddle riding vehicle such as a motorcycle or the like, while a caster angle (an inclination angle of a steering shaft) can be maintained by suppressing displacement of the head section in the forward/rearward direction, it is advantageous in increasing steering performance of the vehicle. For this reason, in the vehicle body frame having the left and right main frames, it is important to suppress deformation of upper edge portions of the left and right main frames in an opening direction.

For this reason, even in the case of the vehicle body frame structure of the related art, the cross member is preferably disposed on the upper edge portions of the left and right main frames. However, when the cross member is disposed on the upper edge portions of the left and right main frames, the cross member is likely to interfere with a member disposed between the main frames, for example, an air cleaner, an electrical component, or the like, and a degree of freedom of the member disposed between the main frames is narrowed.

An aspect of the present invention is to provide a vehicle body frame structure for a saddle riding vehicle capable of increasing steering performance of the vehicle by increasing rigidity of upper edge portions of left and right main frames while securing a sufficient member disposition space between the left and right main frames.

A vehicle body frame structure for a saddle riding vehicle according to the present invention employs the following configuration.
(1) A vehicle body frame structure for a saddle riding vehicle according to an aspect of the present invention includes a head section that rotatably supports a steering shaft; a pair of left and right main frames extending from the head section toward a rear side of a vehicle body; and a cross member that connects the pair of left and right main frames, wherein each of the main frames is formed of a metal material, and the cross member is formed of a material having a higher specific rigidity than the metal material that constitutes each of the main frames.
   According to the above-mentioned configuration, since the cross member is formed of the material having the higher specific rigidity than the metal material, a cross section of the cross member can be decreased in comparison with the case in which the cross member is formed of the metal material. For this reason, reduction in a cross section of the cross member and prevention of deformation of the left and right main frames in the leftward/rightward direction can be achieved.
(2) In the aspect of the above mentioned (1), a hanger section that supports a power unit for driving a vehicle may be formed at each of the main frames, and the cross member may be disposed above the hanger sections of the main frames and bridge vicinities of upper edges of the main frames.
   In this case, since the cross member is formed of the material having the higher specific rigidity than the left and right main frames, even when the cross member is disposed in the vicinity of the upper edges of the main frames separated from a support section of a power unit, deformation of the left and right main frames in the leftward/rightward direction can be suppressed. Accordingly, a large member disposition space can be secured around the cross member.
(3) In the aspect of the above mentioned (1) or (2), the material having a high specific rigidity that constitutes the cross member may be configured linearly by a carbon fiber reinforced resin in which carbon fibers are oriented uniformly in a vehicle body width direction.
   In this case, tensile rigidity of the cross member in the vehicle width direction is increased by the linear carbon fiber reinforced resin. In addition, since the carbon fiber reinforced resin that constitutes the cross member is formed such that the carbon fibers are oriented uniformly in the vehicle body width direction, a carbon fiber amount can be suppressed in comparison with the case in which carbon fibers are oriented in a matrix, and reduction in manufacturing cost can be achieved.
(4) In the aspect of the above mentioned (3), the cross member may be formed integrally with a case member disposed between the pair of left and right main frames.

In this case, since the case member and the cross member are formed integrally, there is no need to secure a gap between the cross member and the case member, and members can be easily integrated and disposed between the left and right main frames to that extent.

According to the aspect of the present invention, since the cross member is constituted by the material having the higher specific rigidity that the metal material that constitutes the main frame, prevention of deformation of the left and right main frames in the leftward/rightward direction can be achieved without increasing the cross section of the cross member. Accordingly, when the configuration is employed, steering performance of the vehicle can be increased by increasing rigidity of the upper edge portions of the left and right main frames while securing a sufficient member disposition space between the left and right main frames.

### BRIEF DESCRIPTION OF THE DRAWINGS

FIG. 1 is a side view of a saddle riding vehicle of an embodiment of the present invention.
FIG. 2 is a plan view of a vehicle body frame of the embodiment of the present invention.
FIG. 3 is a side view of the vehicle body frame of the embodiment of the present invention.
FIG. 4 is a perspective view of an air cleaner of the embodiment of the present invention.

### DESCRIPTION OF EMBODIMENTS

Hereinafter, embodiments of the present invention will be described on the basis of the accompanying drawings. Further, directions of forward, rearward, leftward, rightward, and the like described below are the same as directions in a vehicle described below unless the context clearly indicates otherwise. In addition, in the drawings, an arrow FR showing a forward direction with respect to a vehicle, an arrow UP showing an upward direction with respect to the vehicle, and an arrow LH showing a leftward direction with respect to the vehicle are provided.

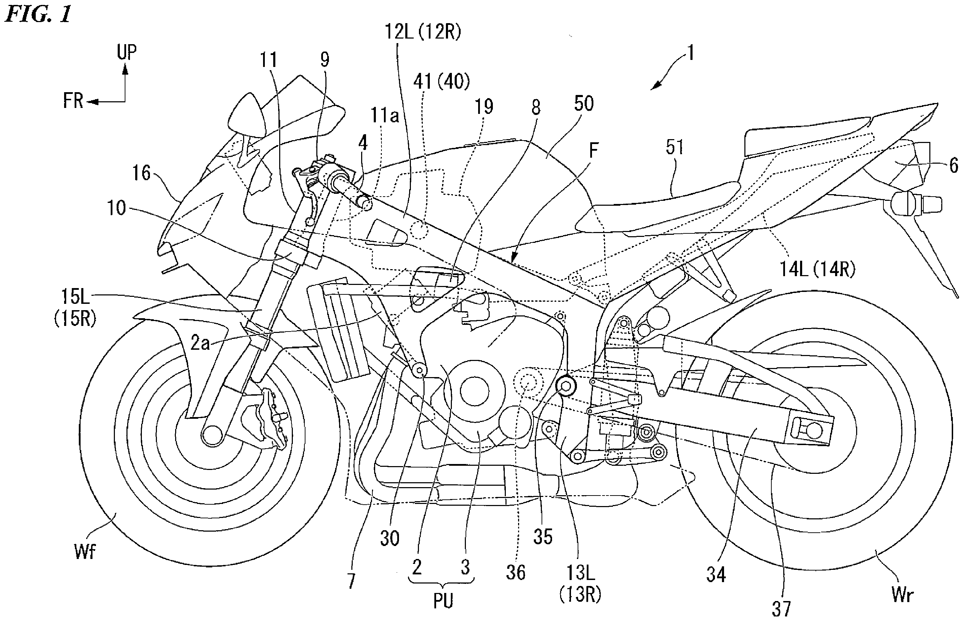

FIG. 1 is a view showing a saddle riding vehicle according to the embodiment from a left side.

The saddle riding vehicle according to the embodiment is a motorcycle having a front wheel Wf and a rear wheel Wr, and the rear wheel Wr is driven by an engine 2. Hereinafter, the saddle riding vehicle of the embodiment is also referred to as "a motorcycle 1."

A vehicle body frame F of the motorcycle 1 includes a head section 11 disposed on a front end portion of the vehicle body frame F and configured to support a steering shaft (not shown) in a rotatable manner, a pair of left and right main frames 12L and 12R extending from the head section 11 to be branched off leftward and rightward in diagonally rearward and downward directions, a pair of left and right pivot plates 13L and 13R extending downward from rear regions of the main frames 12L and 12R, and a pair of left and right seat frames 14L and 14R extending from rear end portions of the main frames 12L and 12R in a diagonally rearward and upward direction of the vehicle body. A head pipe 11a configured to axially support the steering shaft is buried in the head section 11.

Further, members among the above-mentioned members that are overlapped and not seen in the front and the back directions of the drawings (for example, the main frame 12R) are designated by reference numerals with parentheses for the convenience of illustration. In the following description, members that are overlapped and not seen in the front and the back directions of the drawings are treated similarly.

A top bridge 9 and a bottom bridge 10 are fixed to upper and lower end portions of the steering shaft supported by the head section 11. Left and right front forks 15L and 15R serving as suspension members are supported by the top bridge 9 and the bottom bridge 10. The front wheel Wf is rotatably and axially supported by lower end portions of the front forks 15L and 15R. A steering handle 4 is attached to an upper section of the top bridge 9.

In addition, a front cowl 16 configured to cover a front side of the head section 11 is attached to the head section 11.

A fuel tank 50 is attached to upper sections of the main frames 12L and 12R. A seat 51 on which an occupant sits is supported by the seat frames 14L and 14R of a rear section side of the fuel tank 50.

A power unit PU having the engine 2 and a transmission 3 that are main elements is installed below the main frames 12L and 12R. The power unit PU is supported by the main frames 12L and 12R and the pivot plates 13L and 13R. The engine 2 of the power unit PU has a cylinder section 2a standing up at an upper side of the front section. An intake pipe 8 is connected to an upper side of the cylinder section 2a, and an exhaust pipe 7 is connected to a lower side of the cylinder section 2a.

Hanger sections 30 extending rearward and downward diagonally are installed integrally with lower edges closer to front sections of the left and right main frames 12L and 12R. A portion of the engine 2 is supported by the hanger sections 30.

An air cleaner 19 is connected to the intake pipe 8 via a throttle body (not shown). The air cleaner 19 is disposed between the left and right main frames 12L and 12R above the cylinder section 2a.

In addition, the exhaust pipe 7 is routed from a lower side of the cylinder section 2a toward a rear side of the vehicle body, and a muffler 6 is connected to a rear end portion thereof.

A pivot shaft 35 is installed at the left and right pivot plates 13L and 13R. A front end portion of a swing arm 34 is axially supported at the pivot shaft 35 to be vertically swingable. The rear wheel Wr is rotationally and axially supported at a rear end portion of the swing arm 34. An axle of the rear wheel Wr is connected to an output shaft 36 of the power unit PU via a drive chain 37 to enable power transmission.

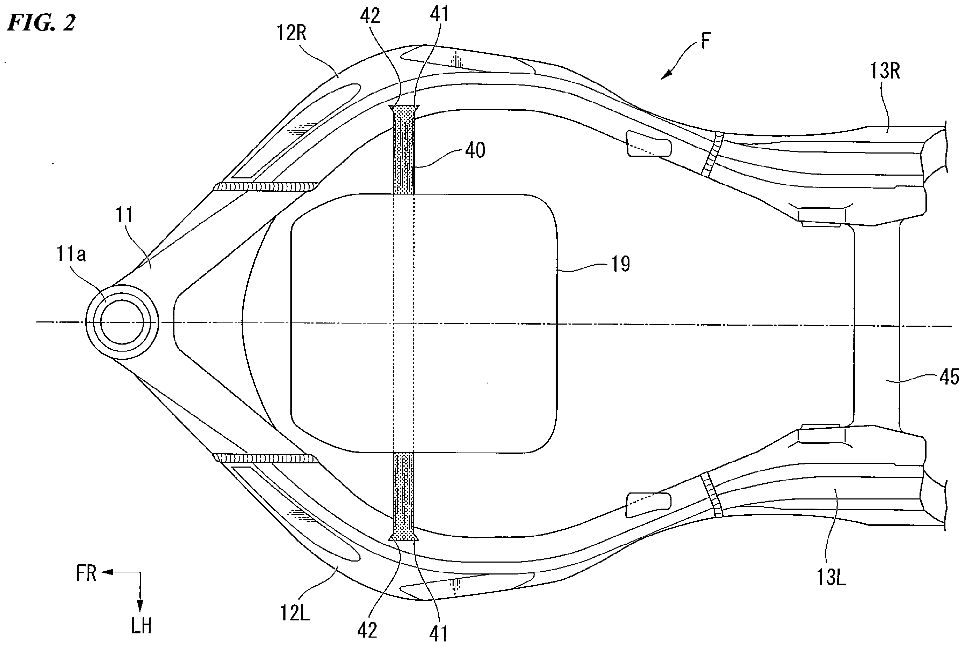

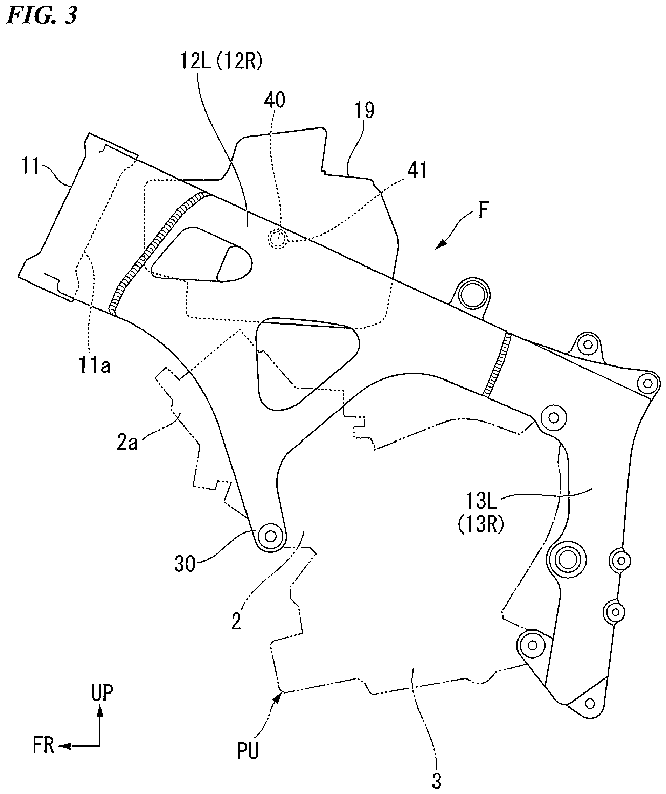

FIG. 2 is a view showing a main section of the vehicle body frame F from above, and FIG. 3 is a view showing the main section of the vehicle body frame F from a left side.

As shown in FIGS. 2 and 3, the vehicle body frame F includes portions of front regions of the head section 11 and the left and right main frames 12L and 12R, intermediate regions of the left and right main frames 12L and 12R, and rear regions of the left and right pivot plates 13L and 13R and the main frames 12L and 12R, which are formed of a metal material such as an aluminum alloy or the like through casting, respectively. Main sections of these metal blocks are formed in a hollow shape. In addition, these metal blocks are joined to each other through welding or the like after casting.

As shown in FIG. 2, the left and right main frames 12L and 12R extend toward the rear side of the vehicle body while a separation width therebetween is gently increased from the head section 11 toward the rear side of the vehicle body and then the separation width is gently decreased. A cross member 40 bridges regions in which the separation width of the left and right main frames 12L and 12R is maximized. The cross member 40 restricts deformation of the left and right main frames 12L and 12R in an opening direction due to input of a load from the front wheel Wf via the steering shaft as the cross member 40 is connected to the left and right main frames 12L and 12R. In addition, as shown in FIG. 2, a cross pipe 45 formed of a metal bridges the left and right pivot plates 13L and 13R.

The cross member 40 is formed of a material having a higher specific rigidity than the metal material of casting sections of the main frames 12L and 12R. In the case of the embodiment, the cross member 40 is formed of a round bar-shaped carbon fiber reinforced resin having a diameter close to a half of a diameter of the cross pipe 45 on the side of the rear section. The carbon fiber reinforced resin that constitutes the cross member 40 is formed of carbon fibers that are oriented uniformly in the vehicle body width direction.

Further, the material having a higher specific rigidity than the metal material is not limited to the carbon fiber reinforced resin and may be a resin or the like other than the carbon fiber with an increased specific rigidity.

The cross member 40 is formed of the carbon fiber reinforced resin in a round bar shape having a small diameter, and left and right end portions thereof are locked and fixed to upper edge portions of the main frames 12L and 12R. For example, as shown in FIG. 2, locking and fixing of the cross member 40 to the left and right main frames 12L and 12R may be performed by forming wedge-shaped locking sections 41 on end portions of the cross member 40 and locking the locking sections 41 to dovetail groove-shaped engaging grooves 42 formed in upper sections of the left and right main frames 12L and 12R. In addition, the locking sections 41 may be further adhered in the corresponding engaging grooves 42 or may be fastened by fastening means.

In addition, when both end portions of the cross member 40 are connected to the left and right main frames 12L and 12R, a preload in an approaching direction is applied to a region in which the separation width of the left and right main frames 12L and 12R is maximized, and in this state, the cross member 40 is locked and fixed to the left and right main frames 12L and 12R. Accordingly, appropriate tension is normally applied to the cross member 40.

Further, the cross member 40 is disposed on a position substantially directly above lower ends of the hanger sections 30 of the left and right main frames 12L and 12R.

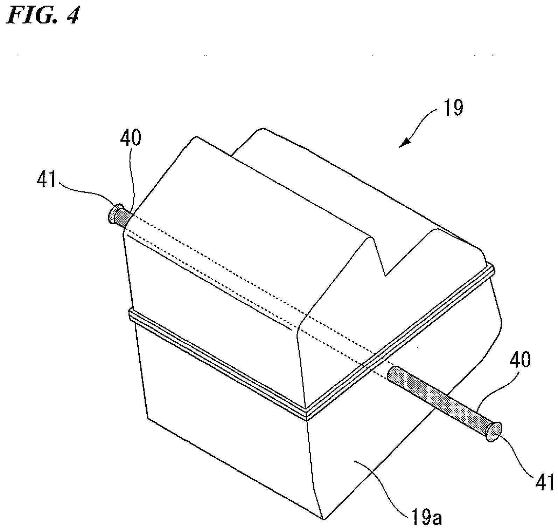

FIG. 4 is a perspective view showing the air cleaner 19 and the cross member 40.

In the embodiment, the cross member 40 passes through left and right sidewalls of a box section 19a of the air cleaner 19 (a case member) and is formed integrally with the box section 19a in this state.

Further, the cross member 40 may be formed integrally with the upper wall or the lower wall of the air cleaner 19 without passing through the air cleaner 19.

As described above, in the vehicle body frame structure according to the embodiment, the cross member 40 that bridges the left and right main frames 12L and 12R is formed of a material having a higher specific rigidity than the metal material. For this reason, a cross section of the cross member 40 can be reduced in size in comparison with the case in which the cross member 40 is formed of the metal material.

Accordingly, when the vehicle body frame structure of the embodiment is employed, steering performance of the vehicle can be increased by increasing rigidity of the upper edge portions of the left and right main frames 12L and 12R while securing a sufficient member disposition space around the cross member 40 that bridges the left and right main frames 12L and 12R.

In particular, in the case of the vehicle body frame structure according to the embodiment, the cross member 40 formed of the material having a high specific rigidity bridges the upper edge portions of the left and right main frames 12L and 12R at a position above the hanger sections 30 of the main frames 12L and 12R. For this reason, a large member disposition space can be secured around the cross member 40 while securely restricting deformation of the main frames 12L and 12R in an opening direction.

In addition, in the vehicle body frame structure according to the present invention, since the cross member 40 is constituted by the carbon fiber reinforced resin in which the carbon fibers are oriented uniformly in the vehicle body width direction, tensile rigidity of the cross member 40 in the vehicle width direction can be largely increased.

Further, since the carbon fiber reinforced resin that constitutes the cross member 40 is formed such that the carbon fibers are oriented uniformly in the vehicle body width direction, a carbon fiber amount can be suppressed in comparison with the case in which carbon fibers are oriented in a matrix, and reduction in manufacturing cost can be achieved.

Further, in the vehicle body frame structure according to the embodiment, since the cross member 40 is formed integrally with the box section 19a of the air cleaner 19, a gap between the cross member 40 and the air cleaner 19 can be eliminated. Accordingly, when the configuration is employed, members can be easily integrated and disposed between the left and right main frames.

Further, the present invention is not limited to the embodiment and various modifications may be made without departing from the scope of the present invention.

For example, while the cross member 40 is formed integrally with the air cleaner 19 that is the case member in the embodiment, the cross member 40 may be formed integrally with the case member such as an electric equipment case or the like in which electrical components are accommodated, instead of the air cleaner.

In addition, the saddle riding vehicle according to the present invention is not limited to a motorcycle (including a prime-mover-attached bicycle and a scooter type vehicle) and also includes a three-wheeled vehicle (including a two-front-wheeled and one-rear-wheeled vehicle and a one-front-wheeled and two-rear-wheeled vehicle) and a four-wheeled compact vehicle.

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

## Claims

1. A vehicle body frame structure for a saddle riding vehicle comprising:
a head section (11) that rotatably supports a steering shaft;
a pair of left and right main frames (12L, 12R) extending from the head section (11) toward a rear side of a vehicle body; and
a cross member (40) that connects the pair of left and right main frames (12L, 12R),
wherein each of the main frames (12L, 12R) is formed of a metal material,
**characterised in that** the cross member (40) is formed of a material having a higher specific rigidity than the metal material that constitutes each of the main frames (12L, 12R).

2. The vehicle body frame structure for a saddle riding vehicle according to claim 1,
wherein a hanger section (30) that supports a power unit (PU) for driving a vehicle is formed at each of the main frames (12L, 12R), and
the cross member (40) is disposed above the hanger sections (30) of the main frames (12L, 12R) and bridges vicinities of upper edges of the main frames (12L, 12R).

3. The vehicle body frame structure for a saddle riding vehicle according to claim 1 or 2,
wherein the material having a high specific rigidity that constitutes the cross member (40) is configured linearly by a carbon fiber reinforced resin in which carbon fibers are oriented uniformly in a vehicle body width direction.

4. The vehicle body frame structure for a saddle riding vehicle according to claim 3,
wherein the cross member (40) is formed integrally with a case member (19) disposed between the pair of left and right main frames (12L, 12R).

## Patentansprüche

1. Fahrzeugrahmenkonstruktion für ein Sattelfahrfahrzeug, umfassend:
einen Kopfabschnitt (11), der eine Lenkwelle drehbar trägt;
ein Paar von linken und rechten Hauptrahmen (12L, 12R), die sich vom Kopfabschnitt (11) zu einer Rückseite einer Fahrzeugkarosserie erstrecken; und
ein Querträger (40), der das Paar von linken und rechten Hauptrahmen (12L, 12R) verbindet,
wobei jeder der Hauptrahmen (12L, 12R) aus einem metallischen Material gebildet ist,
**dadurch gekennzeichnet, dass**
der Querträger (40) aus einem Material mit einer höheren spezifischen Steifigkeit als das metallische Material gebildet ist, das jeden der Hauptrahmen (12L, 12R) bildet.

2. Fahzeugrahmenkonstruktion für ein Sattelreitfahrzeug nach Anspruch 1,
wobei ein Aufhängeabschnitt (30), der eine Antriebseinheit (PU) zum Antreiben eines Fahrzeugs trägt, an jedem der Hauptrahmen (12L, 12R) ausgebildet ist, und
der Querträger (40) über den Aufhängeabschnitten (30) der Hauptrahmen (12L, 12R) angeordnet ist und Umgebungen von Oberkanten der Hauptrahmen (12L, 12R) überbrückt.

3. Fahrzeugrahmenkonstruktion für ein Sattelreitfahrzeug nach Anspruch 1 oder 2,
wobei das Material mit einer hohen spezifischen Steifigkeit, die den Querträger (40) bildet, linear durch einen kohlefaserverstärkten Kunststoff konfiguriert ist, in dem Kohlenstoffasern gleichmäßig in einer Richtung der Fahrzeugkarosseriebreite ausgerichtet sind.

4. Fahrzeugrahmenkonstruktion für ein Sattelreitfahrzeug nach Anspruch 3,
wobei der Querträger (40) integral mit einem Gehäuseelement (19) ausgebildet ist, das zwischen dem Paar von linken und rechten Hauptrahmen (12L, 12R) angeordnet ist.

## Revendications

1. Structure de châssis de carrosserie de véhicule pour un véhicule à selle comprenant :
une section de tête (11) qui supporte en rotation un arbre de direction ;
une paire de châssis principaux gauche et droit (12L, 12R) s'étendant à partir de la section de tête (11) vers un côté arrière d'une carrosserie de véhicule ; et
une traverse (40) qui raccorde la paire de châssis principaux gauche et droit (12L, 12R),
dans laquelle chacun des châssis principaux (12L, 12R) est formé d'un matériau métallique,
**caractérisée en ce que**
la traverse (40) est formée d'un matériau ayant une rigidité spécifique plus élevée que le matériau métallique qui constitue chacun des châssis principaux (12L, 12R).

2. Structure de châssis de carrosserie de véhicule pour un véhicule à selle selon la revendication 1,
dans laquelle une section de suspension (30) qui supporte une unité de puissance (PU) pour entraîner un véhicule est formée au niveau de chacun des châssis principaux (12L, 12R), et
la traverse (40) est disposée au-dessus des sections de suspension (30) des châssis principaux (12L, 12R) et forme un pont entre des environs de bords supérieurs des châssis principaux (12L, 12R).

3. Structure de châssis de carrosserie de véhicule pour un véhicule à selle selon la revendication 1 ou 2,
dans laquelle le matériau ayant une rigidité spécifique élevée qui constitue la traverse (40) est configuré linéairement par une résine renforcée de fibres de carbone dans laquelle des fibres de carbone sont orientées uniformément dans une direction de largeur de carrosserie de véhicule.

4. Structure de châssis de carrosserie de véhicule pour un véhicule à selle selon la revendication 3,
dans laquelle la traverse (40) est formée d'un seul tenant avec un organe de carter (19) disposé entre la paire de châssis principaux gauche et droit (12L, 12R).
